(19) Europäisches Patentamt
European Patent Office
Office européen des brevets

(11) Veröffentlichungsnummer: **0 458 009 A2**

# (12) EUROPÄISCHE PATENTANMELDUNG

(21) Anmeldenummer: **91101410.8**

(22) Anmeldetag: **02.02.91**

(51) Int. Cl.[5]: **C08G 18/50**, C08J 9/02, C08J 9/14, //C08L75:08

(30) Priorität: **07.05.90 DE 4014537**

(43) Veröffentlichungstag der Anmeldung: **27.11.91 Patentblatt 91/48**

(84) Benannte Vertragsstaaten: **BE DE FR GB IT NL**

(71) Anmelder: **Th. Goldschmidt AG**
**Goldschmidtstrasse 100 Postfach 101461**
**W-4300 Essen 1(DE)**

(72) Erfinder: **Möhring, Volker, Dr.**
**Otto-Hue-Strasse 17**
**W-4330 Mülheim/Ruhr(DE)**
Erfinder: **Zellmer, Volker, Dr.**
**Horster Strasse 177**
**W-4250 Bottrop(DE)**

## (54) Verfahren zur Herstellung von hochelastischen, Polyurethangruppen aufweisenden Schaumstoffen mit verminderter Stauchhärte.

(57) Verfahren zur Herstellung von hochelastischen, Urethangruppen aufweisenden Schaumstoffen mit verminderter Stauchhärte, bei dem man die Umsetzung der Polyurethanbildner in Gegenwart von 0,01 bis 5 Gew.-%, bezogen auf Polyol, einer Verbindung, die mindestens einen Polyoxyalkylenrest und mindestens einen anionischen Rest im Molekül aufweist, durchführt.

Durch den Zusatz dieser Verbindung kann die Verwendung von Fluorkohlenwasserstoffen zur Verringerung der Stauchhärte erheblich eingeschränkt werden.

EP 0 458 009 A2

Die Erfindung betrifft ein Verfahren zur Herstellung von hochelastischen, Urethangruppen aufweisenden Schaumstoffen mit verminderter Stauchhärte durch Umsetzung von mindestens zwei Hydroxylgruppen aufweisenden Polyethern eines Molekulargewichtes von 400 bis 10 000 mit Polyisocyanaten in Gegenwart von Vernetzungsmitteln, Katalysatoren und Wasser und gegebenenfalls in Gegenwart von Emulgatoren, Stabilisatoren, organischen Treibmitteln und weiteren Hilfs- und Zusatzmitteln.

Weichelastische Polyurethanschaumstoffe werden in breitem Umfang in der Polstermöbel- und Automobilindustrie verwendet. Für die verschiedenen Einsatzzwecke und die sich daraus ableitenden unterschiedlichen Qualitäten ist es notwendig, neben der Rohdichte in erster Linie die Stauchhärte über einen weiten Bereich variieren zu können.

Um Schaumstoffe mit erhöhter Stauchhärte herzustellen, hat man bereits inerte anorganische oder organische Füllstoffe eingesetzt. Die Stauchhärte kann auch durch Polymerisationsreaktionen in den zur Verschäumung dienenden Polyolen erhöht werden.

Eine Erniedrigung der Stauchhärte wird durch Mitverwendung physikalischer Treibmittel, wie Fluorkohlenwasserstoffe oder Methylenchlorid, erreicht. Dem steht das Bestreben entgegen, aus Umweltgründen die Verwendung von Fluorkohlenwasserstoffen möglichst weitgehend einzuschränken. Gleiches gilt für das physiologisch nicht unbedenkliche Methylenchlorid.

In Formulierungen, in denen inerte Füllstoffe eingesetzt werden, um statt einer Härtesteigerung andere Schaumeigenschaften zu erhalten, ist zum Erhalt weicher Schäume die Mitverwendung physikalischer Treibmittel nach dem Stand der Technik sogar unerläßlich. Beispielsweise werden erhebliche Mengen Melamin oder Aluminiumhydroxid eingesetzt, um auf der Basis von hochelastischen, sogenannten HR-Schäumen Polstermöbel und Matratzen von hoher Flammwidrigkeit herzustellen. Die damit verbundene Erhöhung der Stauchhärte kann aus Komfortgründen nicht akzeptiert werden, so daß physikalische Treibmittel in erheblichen Mengen eingesetzt werden müssen.

Aus dem Stand der Technik ist ferner der Zusatz von Verbindungen, die mindestens einen Polyoxyalkylenrest und mindestens einen anionischen Rest enthalten, zu Formulierungen für die Polyurethanschaumstoffherstellung bekannt.

So ist in der CS-PS 253 786 die Verwendung eines Gemisches aus einem Polyoxyalkylenalkylethersulfat und einem Polyoxyethylen-Polyoxypropylen-Polymerenals Emulgier- und Dispergiermittel bei der Herstellung flexibler Polyesterurethanschaumstoffe beschrieben.

Aus der DE-OS 11 78 595 ist die Verwendung anionischer Tenside als Schaumstabilisatoren zur Herstellung von flexiblen Polyesterpolyurethanschäumen bekannt.

Der US-PS 4 751 251 kann die Verwendung von Nonylphenolpolyoxyethylenethersulfaten als Schaumstabilisatoren zur Herstellung von Polyurethan- oder Polyisocyanurat-Hartschäumen entnommen werden.

In der JP-PS 56/152 826 ist die Verwendung von carboxymethylierten Polyetherpolyolen als Trimerisierungskatalysatoren zur Herstellung von Polyisocyanurat-Hartschäumen offenbart. In der US-PS 4 235 811 sind Derivate von aminierten, alkoxylierten aliphatischen Alkoholen mit Sulfonat- oder Carboxylatgruppen als Trimerisierungskatalysatoren zur Bildung von Polyisocyanurat-Hartschäumen genannt worden.

Eine Verwendung von derartigen anionischen Tensiden zur Herstellung hochelastischer, sogenannter high resilient Polyurethanschäume ist jedoch dem Stand der Technik nicht zu entnehmen. Ebenso war die Verwendung derartiger Tenside zur Herstellung von Polyurethanschäumen mit verminderter Stauchhärte nicht bekannt.

Aufgabe der vorliegenden Erfindung ist es, in technisch einfacher Weise Schaumstoffe innerhalb eines weiten Bereiches der Rohdichte herzustellen, wobei die Schäume bei vorgegebener Rohdichte niedrige Stauchhärten aufweisen sollen. Die Verwendung von Fluorkohlenwasserstoffen soll dabei so weit als möglich eingeschränkt werden.

Diese erfindungsgemäße Aufgabe kann überraschenderweise dadurch gelöst werden, daß man die Umsetzung der Polyurethanbildner in Gegenwart einer Verbindung Y, welche mindestens einen Polyoxyalkylenrest und mindestens einen anionischen Rest im Molekül aufweist, in Mengen von 0,01 bis 5 Gew.-%, bezogen auf Polyol, durchführt.

Die Verbindung Y ist in ihrer Struktur in einem weiten Bereich variabel und muß lediglich die Bedingung erfüllen, daß sie mindestens einen Polyoxyalkylenrest und mindestens einen anionischen Rest im Molekül aufweist.

Vorzugsweise verwendet man als Verbindung Y eine solche der allgemeinen Formel

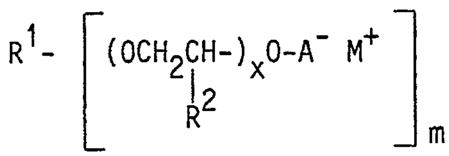

I

wobei

- $R^1$ ein Wasserstoff-, ein m-wertiger Alkyl-, Aryl- oder Alkylarylrest ist und der Alkylrest jeweils 1 bis 22 Kohlenstoffatome aufweist,
- $R^2$ im polymeren Molekül gleich oder verschieden und ein Wasserstoff-, Methyl- oder Ethylrest ist,
- A ein anorganischer oder organischer anionischer Rest,
- M ein Kation ist, welches eine positive Ladung aufweist, die der negativen Ladung des Anions entspricht,
- m einen Wert von 1 bis 8 hat, jedoch gleich 1 ist, wenn $R^1$ ein Wasserstoffrest ist und
- X einen durchschnittlichen Wert von 1 bis 100 hat.

Der Rest $R^1$ weist als Alkylrest 1 bis 22 Kohlenstoffatome auf. Vorzugsweise ist der Alkylrest geradkettig und hat insbesondere 1 bis 8 Kohlenstoffatome. Als Arylrest ist der Phenylrest bevorzugt, der gegebenenfalls substituiert sein kann. Beispiele von Alkylarylresten sind der Octyl-, Nonyl- und Dodecylphenylrest.

A ist ein anorganischer oder organischer anionischer Rest. Beispiele hierfür sind die Reste $-SO_3$, $-CH_2CH_2-SO_3$, $-(CH_2)_3-SO_3$,

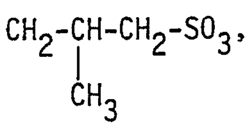, 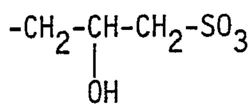, 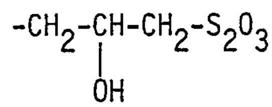,

$-Z-COO$ (Z = zweiwertiger, gegebenenfalls substituierter Kohlenwasserstoffrest),

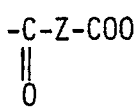,

$PO_3$, $PO_2$, $-(CH_2)_n-PO_3$, $-(CH_2)_n-PO_2$ (n = 1, 2, 3 oder 4).

Das Kation M ist vorzugsweise ein Alkali-, Erdalkali-, Mn-, Fe-, Co-, Ni-, Cu-, Zn-, Al-, $NH_4$-, Alkylammonium- oder Hydroxyalkylammonium-Ion. Der Alkylrest des Alkylammonium-Ions hat 1 bis 4 Kohlenstoffatome, der des Hydroxyalkylrestes 2 bis 4 Kohlenstoffatome.

Verbindungen der Formel I sind durch an sich bekannte Anlagerung von Alkylenoxiden an H-acide Gruppen enthaltende Verbindungen und anschließende Einführung der anionischen Gruppe erhältlich. Als H-acide Verbindungen kommen insbesondere Alkohole in Frage. Entsprechende Literaturhinweise zur Herstellung der anionischen Verbindungen können dem Tensid-Taschenbuch, Carl Hanser Verlag, 1981, Seiten 85 bis 167, und Ullmanns Encyclopädie der technischen Chemie, Verlag Chemie, 1982, 4. Auflage, Band 22, Seiten 468 bis 469 entnommen werden.

Beispiele geeigneter Verbindungen sind:
(die Angaben Y1, Y2 usw. dienen zur Identifizierung der Produkte in den Beispielen und Tabellen)

A = $-SO_3$:
Polyoxyalkylensulfate wie

$CH_3-(CH_2-)_{11}(OCH_2-CH_2-)_2O-SO_3^- \ Na^+$ Y1

$C_9H_{19}-Ph-(OCH_2-CH_2-)_{20}O-SO_3^- \ Na^+$ Ph = 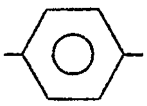 Y2

A = $-CH_2CH_2-SO_3$:
Polyoxyalkylenethylsulfonate wie

$H-(OCH_2-CH_2-)_{15}O-CH_2CH_2-SO_3^- \ Na^+$

$Na^+ \ SO_3^- -CH_2CH_2-O-(CH_2-CH_2-O-)_6(CH_2-)_4(O-CH_2-CH_2-)_6O-CH_2\underset{\displaystyle SO_3^- \ Na^+}{\underset{|}{C}}H_2$ Y3

A = $-(CH_2-)_3SO_3$, $-CH_2-\underset{\displaystyle CH_3}{\underset{|}{C}}H-CH_2-SO_3$:
Polyoxyalkylenpropyl- bzw. Polyoxyalkylen-2-methyl-propylsulfonate wie

$H-(OCH_2-CH_2-)_{10}(OCH_2-\underset{\displaystyle CH_3}{\underset{|}{C}}H-)_8O-(CH_2-)_3SO_3^- \ K^+$ Y4

$H-(OCH_2-CH_2-)_{30}(OCH_2-\underset{\displaystyle C_2H_5}{\underset{|}{C}}H-)_5O-(CH_2-)_3SO_3^- \ NH_4^+$ Y5

$GL-\left[(OCH_2-CH_2-)_{10}(OCH_2-\underset{\displaystyle CH_3}{\underset{|}{C}}H-)_{12}O-CH_2-\underset{\displaystyle CH_3}{\underset{|}{C}}H-CH_2-SO_3^- \ Na^+\right]_3$ Y6

(GL = von Glycerin abgeleiteter Rest $-H_2C-\underset{|}{C}H-CH_2-$ )

$A = -CH_2-\underset{OH}{\underset{|}{C}}H-CH_2-SO_3$:

Polyoxyalkylenhydroxypropylsulfonate wie:

$$CH_3-(CH_2-)_3(OCH_2-CH_2-)_4O-CH_2-\underset{OH}{\underset{|}{C}}H-CH_2-SO_3^-\ Na^+$$

$$SR-\left[(OCH_2-CH_2-)_4(OCH_2-\underset{CH_3}{\underset{|}{C}}H-)_4O-CH_2-\underset{OH}{\underset{|}{C}}H-CH_2-SO_3^-\ Na^+\right]_6 \qquad Y7$$

(SR = von Sorbit abgeleiteter Rest $-H_2C-(\underset{|}{C}H-)_4CH_2-$ )

$A = -CH_2-\underset{OH}{\underset{|}{C}}H-CH_2-S_2O_3$:

Polyoxyalkylenhydroxypropylthiosulfate (Bunte-Salze) wie

$$\left[CH_3-(OCH_2\underset{CH_3}{\underset{|}{C}}H-)_8O-CH_2-\underset{OH}{\underset{|}{C}}H-CH_2-S_2O_3^-\right]_2 Mg^{2+} \qquad Y8$$

$$CH_3-(OCH_2-CH_2-)_{12}O-CH_2-\underset{OH}{\underset{|}{C}}H-CH_2-S_2O_3^-\ K^+$$

$A = -Z-COO$:

Polyoxyalkylenalkylethercarboxylate wie

$$Na^+\ ^-OOC-CH_2-O-(CH_2-CH_2O-)_4CH_2CH_2-(OCH_2-CH_2-)_4O-CH_2-COO^-\ Na^+$$

$$C_9H_{19}-Ph-(OCH_2-CH_2-)_8O-CH_2CH_2-COO^-\ NH_4^+ \qquad Y9$$

$$CH_3-(OCH_2-CH_2-)_6(OCH_2-\underset{\displaystyle CH_3}{\underset{|}{C}H}-)_4O-CH_2-Ph-COO^-\ Na^+$$

$$A = -\overset{\displaystyle O}{\overset{\|}{C}}-Z-COO:$$

Polyoxyalkylenhalbestercarboxylate wie

$$\left[CH_3-(CH_2-)_7(OCH_2-CH_2-)_8O-\underset{\displaystyle O}{\underset{\|}{C}}-CH=CH-COO^-\right]_2\ Ca^{2+}$$ Y10

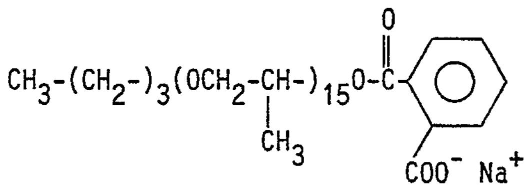 Y11

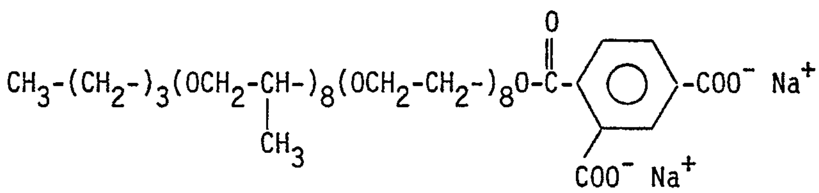

$$A = -PO_3:$$

Polyoxyalkylenphosphate (Mono- und Diester) wie

$$CH_3-(CH_2-)_{11}(OCH_2-CH_2-)_7O-PO_3^{\ 2-}\ 2Na^+$$ Y12

$$\left[C_9H_{19}-Ph-(OCH_2-CH_2-)_9O-\right]_2\ PO_2^{\ -}\ K^+$$

$$A = -PO_2:$$

Polyoxyalkylenphosphite wie

$$Ph-CH_2-(OCH_2-CH_2-)_{24}O-PO_2^{\ -}\ Na^+$$

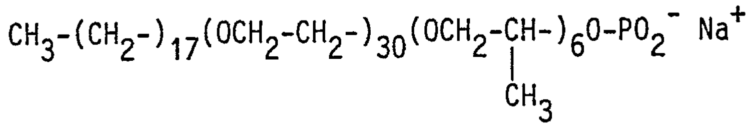

Y13

$A = -(CH_2-)_nPO_3$:
Polyoxyalkylenphosphonate wie

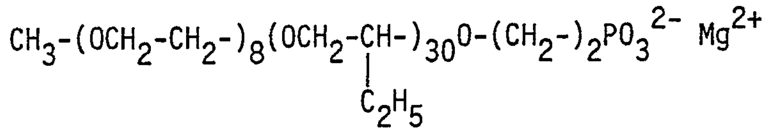

Y14

$C_4H_9-Ph-(OCH_2-CH_2-)_{15}O-(CH_2-)_4PO_3^{2-}\ 2K^+$

$A = -(CH_2-)_nPO_2$:
Polyoxyalkylenphosphinate wie

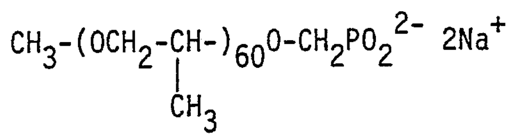

$CH_3-(CH_2-)_7(OCH_2-CH_2-)_{10}O-(CH_2-)_2PO_2^{2-}\ 2NH_4^+$ Y15

Vorzugsweise verwendet man ferner als Verbindung Y eine solche der allgemeinen Formel

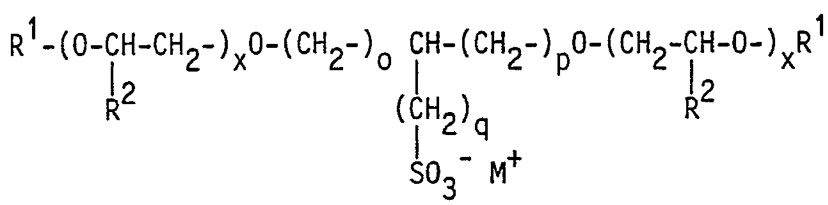

II

wobei $R^1$, $R^2$, M und x die bereits angegebene Bedeutung haben, o, p und q gleich oder verschieden sind und jeweils Werte von 0 bis 7 haben, jedoch die Summe o + p + q mindestens gleich 3 ist.

Die Verbindungen sind durch Alkoxylierung von sulfonierten Alkendiolen erhältlich. Beispiele geeigneter Alkendiole sind 2-Buten-1,4-diol, 1-Buten-3,4-diol, Isobuten-1,3-diol und 2-Methyl-2-buten-1,4-diol. Die Sulfonierung erfolgt durch Addition von Verbindungen der Formel $HSO_3M$ an die Doppelbindung des Diols.

Beispiele geeigneter Verbindungen sind:

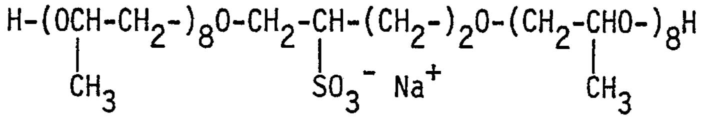

Y16

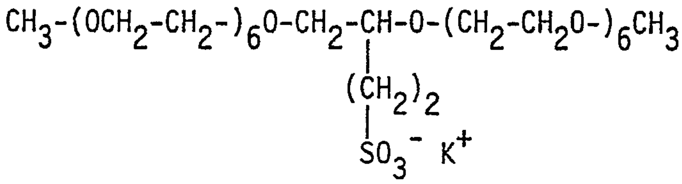

Y17

Eine weitere Gruppe von bevorzugt zu verwendenden Verbindungen Y entspricht der allgemeinen Formel

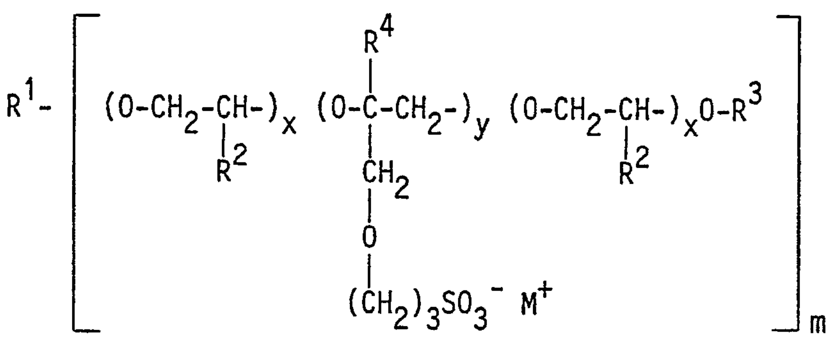

III

wobei $R^1$, $R^2$, M, m und x die bereits angegebene Bedeutung haben, $R^3$ ein Wasserstoff-, Alkyl-, Aryl- oder Alkylarylrest ist und der Alkylrest 1 bis 22 Kohlenstoffatome aufweist, $R^4$ ein Wasserstoff- oder Methylrest und y gleich m oder ein Vielfaches von m ist.

Die Herstellung dieser Verbindungen III ist in der DE-PS 36 33 421 beschrieben. Sie erfolgt durch Anlagerung von Alkylenoxiden und Allyl- und/oder Methallylglycidethern an ein- oder mehrwertige Alkohole und Addition von $HSO_3M$ an die olefinische Doppelbindung. Beispiele geeigneter Verbindungen sind:

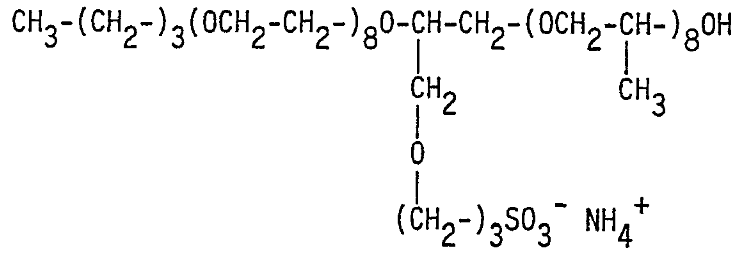 Y18

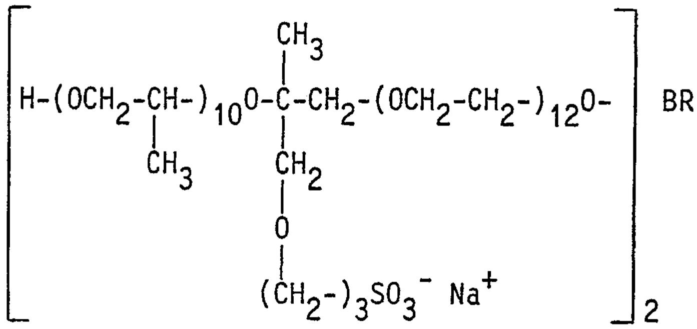 Y19

(BR = Butandiol-1,4-Rest $-(CH_2-)_4$ )

Weitere bevorzugt zu verwendende Verbindungen Y entsprechen der allgemeinen Formel

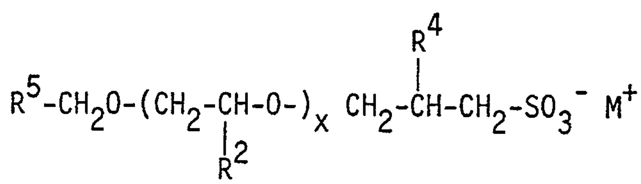 IV

wobei $R^2$, $R^4$, x und M die bereits angegebene Bedeutung haben,

$R^5$ den Rest 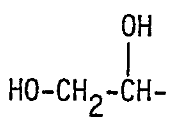 oder 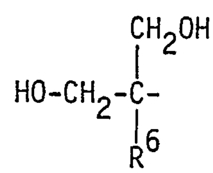

bedeutet, in dem $R^6$ ein Methyl-, Ethyl- oder Propylrest ist.

Derartige Verbindungen sind in der EP-PS 0 158 053 beschrieben. Sie können durch Allylierung von ketalisierten 1,2- oder 1,3-Diol-Polyethern, anschließende Deketalisierung und Sulfonierung mit $HSO_3M$ erhalten werden. Dabei kann auch zunächst die Sulfonierung stattfinden und die Ketalisierung erst in einer zweiten Stufe erfolgen. Beispiele solcher Verbindungen sind:

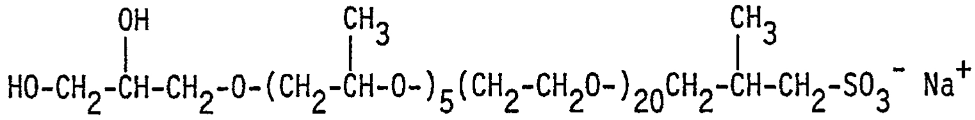 Y20

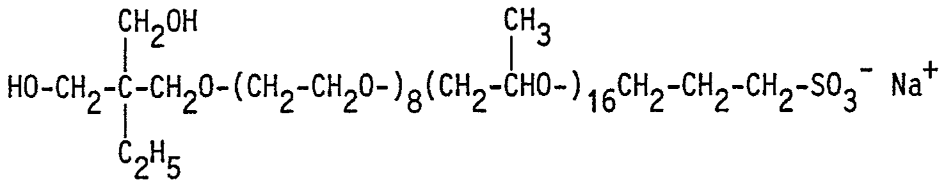 Y21

Mit Vorteil können beim erfindungsgemäßen Verfahren ferner Verbindungen Y eingesetzt werden, die folgender Formel entsprechen:

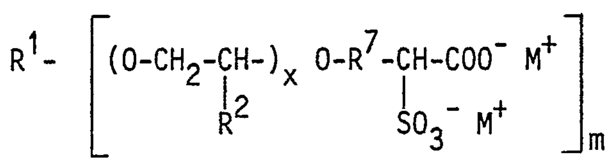 V

wobei $R^1$, $R^2$, M, x und m die bereits angegebene Bedeutung haben, $R^7$ ein zweiwertiger Alkylrest mit 1 bis 22 Kohlenstoffatomen, ein zweiwertiger Aryl- oder Alkylarylrest oder ein Rest der Formel

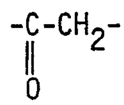

ist.

Die Sulfobernsteinsäurehalbestercarboxylate

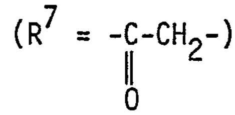

sind erhältlich durch Sulfonierung der Maleinsäurehalbestercarboxylate. Die α-Sulfoalkylpolyoxyalkylenethercarboxylate sind erhältlich durch Sulfonierung der entsprechenden Alkylpolyoxyalkylenethercarboxylate.

Beispiele dieser Verbindungen sind:

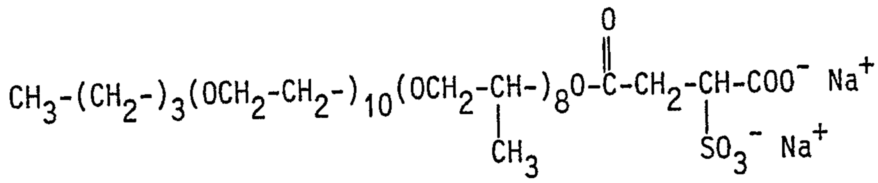

Y22

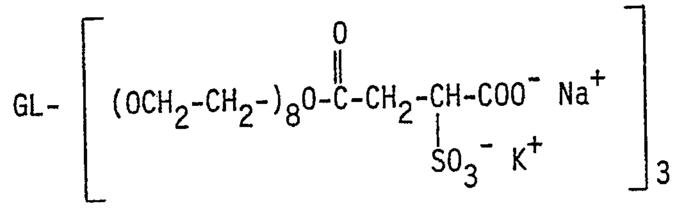

(GL = von Glycerin abgeleiteter Rest $-H_2C-CH-CH_2-$ )

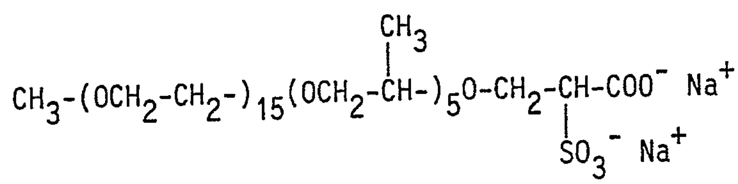

Y23

Schließlich sind als Verbindungen Y noch folgende Verbindungen bevorzugt:

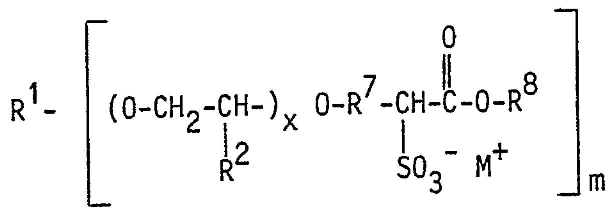

VI

wobei $R^1$, $R^2$, $R^7$, M, x und m die bereits angegebene Bedeutung haben, $R^8$ die Bedeutung von $R^1$ hat oder der Rest

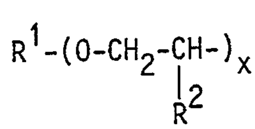

ist.

Die Sulfobernsteinsäurediester sind erhältlich durch Sulfonierung von Maleinsäurediestern

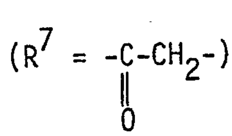

Die α-Sulfoalkylpolyoxyalkylenetherester sind erhältlich durch Sulfonierung der entsprechenden Alkylpolyoxyalkylenetherester.

Beispiele solcher Verbindungen sind:

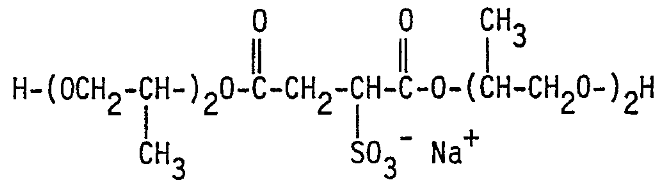

Y24

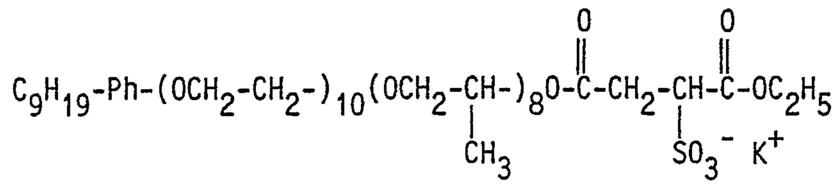

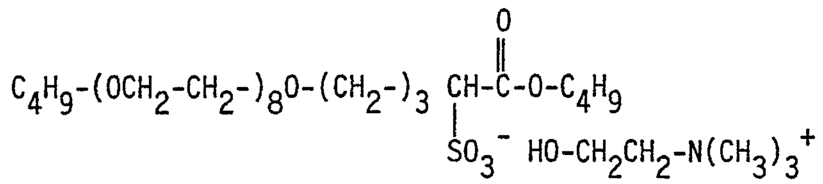

Y25

Die Herstellung von HR-Block- und Formschäumen ist bekannt und wird z.B. in "Flexible Polyurethane Foams, Chemistry and Technology", Applied Science Publishers, 1982, Seiten 133 bis 139 und 158 bis 173 beschrieben. Weitere Angaben können dem "Kunststoff-Handbuch", Band 7, Carl Hanser Verlag, 1983, entnommen werden. Danach erhält man hochelastische Schaumstoffe durch die Kombination hochmolekularer, hochaktiver Polyetherpolyole mit einem möglichst hohen Gehalt an primären OH-Endgruppen und polyfunktionellen Isocyanaten in Gegenwart von geeigneten Vernetzungsmitteln.

In den DE-PSen 25 07 161 und 26 03 498 ist die Herstellung hochelastischer Schaumstoffe aus ausschließlich auf Alkylenoxiden aufgebauten hochreaktiven Polyetherpolyolen und Diisocyanaten unter Zusatz von kristallinen, im Polyetherpolyol bei Raumtemperatur nur wenig löslichen oder unlöslichen Vernetzungsmitteln beschrieben. Es entspricht aber auch dem Stand der Technik, Polyetherpolyole zu verwenden, die organische Füllstoffe enthaltend, wie z.B. die sogenannten Polymer-, PHD- oder PIPA-Polyole, welche durch Umsetzung organischer Monomerer im Polyetherpolyol in Form von sedimentationsstabilen Dispersionen hergestellt werden können. Als Vernetzungsmittel werden in der Regel dabei Alkanolamine oder/und höherfunktionelle Alkohole eingesetzt.

Das erfindungsgemäße Verfahren und die Eigenschaften der nach diesem Verfahren hergestellten Schäume werden anhand der folgenden Beispiele noch näher erläutert.

Hierbei werden folgende Produkte eingesetzt und Produktbezeichnungen verwendet:

| | |
|---|---|
| Polyol A: | handelsübliches hochreaktives HR-Polyol mit überwiegend primären OH-Endgruppen. OH-Zahl ca. 36. |
| Polyol B: | handelsübliches hochreaktives HR-Polyol, welches eine sedimentationsstabile Polyharnstoffdispersion als Füllstoff enthält (sogenanntes PHD-Polyol). OH-Zahl ca. 28. |
| Polyol C: | handelsübliches hochreaktives HR-Polyol, welches eine sedimentationsstabile Dispersion eines Copolymeren auf Basis Styrol und Acrylnitril enthält (sogenanntes Polymer-Polyol). OH-Zahl ca. 30. |
| Polyol D: | HR-Polyol gemäß DE-PS 31 03 757, welches eine sedimentationsstabile Polyurethandispersion (durch in-situ Reaktion eines Isocyanates mit einem Alkanolamin in einem Polyol des Typs A) enthält (sogenanntes PIPA-Polyol). |
| DEOA: | N,N-Diethanolamin |
| Ortegol®204: | handelsüblicher Vernetzer gemäß DE-PS 25 07 161 und DE-PS 26 03 498 |
| TEGOAMIN®BDE: | 70 %ige Lösung von Bis(2-dimethylaminoethyl)ether in Dipropylenglykol |
| TEGOAMIN®33: | 33 %ige Lösung von Triethylendiamin in Dipropylenglykol |
| Kosmos®29: | Zinn-II-octoat |
| Kosmos®19: | Dibutylzinn-IV-dilaurat |
| Tegostab®B 8681: | handelsüblicher Schaumstabilisator zur Herstellung von HR-Block- und Form- |

| | |
|---|---|
| | schäumen |
| Melamin: | handelsübliches Melamin, mittlere Teilchengröße 20 µm |
| F 11: | Trichlorfluormethan |
| Desmodur®T 80: | handelsübliches Toluylendiisocyanat, charakterisiert durch ein Isomerenverhältnis 2,4- zu 2,6- von 80 : 20 |

Verbindung Y gemäß der Erfindung

Die Herstellung der Schaumstoffe erfolgt gemäß der sogenannten Methode der Handverschäumung. Dabei werden alle Komponenten bis auf das Isocyanat und gegebenenfalls das physikalische Treibmittel 60 Sekunden bei 1000 Umdrehungen/Minute vorgerührt. Anschließend wird das Isocyanat und gegebenenfalls das Treibmittel zugesetzt und weitere 7 Sekunden bei 2500 Umdrehungen/Minute gerührt. Die flüssige Mischung wird dann in einen oben offenen Behälter der Abmessung 30 cm x 30 cm x 30 cm gegeben, so daß der Schaum frei aufsteigen kann.

Die Bestimmung des Raumgewichtes und der Stauchhärte des Schaumes erfolgt nach 72stündiger Lagerung im Normklima, d.h. 23 ±1 ° C und 50 ±2 % relative Luftfeuchtigkeit. Die Ermittlung der Stauchhärte erfolgt dabei nach DIN 53 577 bei 40 %iger Stauchung.

Tabelle 1 - Formulierungen

(Angaben in Gew.-%)

| | Formulierung 1 | 2 | 3 | 4 | 5 | 6 | 7 | 8 | 9 | 10 |
|---|---|---|---|---|---|---|---|---|---|---|
| Polyol A | 100 | 100 | 100 | 100 | 100 | 100 | 100 | 100 | 100 | 100 |
| Polyol B | - | - | - | - | - | - | - | - | - | - |
| Polyol C | - | - | - | - | - | - | - | - | - | - |
| Polyol D | - | - | - | - | - | - | - | - | - | - |
| Wasser (gesamt) | 2,5 | 3,0 | 3,5 | 4,0 | 2,5 | 2,5 | 3,0 | 3,0 | 2,5 | 3,0 |
| DEOA | 0,5 | 0,5 | 0,5 | 0,5 | 0,5 | 0,5 | 0,5 | 0,5 | 0,5 | 0,5 |
| Ortegol® 204 | 3,0 | 3,0 | 3,0 | 3,0 | 3,0 | 3,0 | 3,0 | 3,0 | 3,0 | 3,0 |
| Kosmos® 29 | 0,15 | 0,15 | 0,15 | 0,15 | 0,15 | 0,15 | 0,15 | 0,15 | 0,15 | 0,15 |
| Kosmos® 19 | - | - | - | - | - | - | - | - | - | - |
| TEGOAMIN® BDE | 0,12 | 0,10 | 0,08 | 0,06 | 0,12 | 0,12 | 0,10 | 0,10 | 0,12 | 0,10 |
| TEGOAMIN® 33 | 0,4 | 0,4 | 0,4 | 0,4 | 0,4 | 0,4 | 0,4 | 0,4 | 0,4 | 0,4 |
| Tegostab® B 8681 | 1,0 | 1,0 | 1,0 | 1,0 | 1,0 | 1,0 | 1,0 | 1,0 | 1,0 | 1,0 |
| F 11 | - | - | - | - | 5 | 10 | 5 | 10 | - | - |
| Melamin | 25 | 25 | 25 | 25 | 25 | 25 | 25 | 25 | 25 | 25 |
| Desmodur® T 80 | 35,1 | 39,9 | 44,7 | 49,6 | 35,1 | 35,1 | 39,9 | 39,9 | 35,1 | 39,9 |
| erfindungsgemäße Verbindung (Y) | - | - | - | - | - | - | - | - | 1,0 | 1,0 |

Tabelle 1 - Formulierungen (Fortsetzung)

(Angaben in Gew.-%)

| | Formulierung 11 | 12 | 13 | 14 | 15 | 16 | 17 | 18 | 19 | 20 |
|---|---|---|---|---|---|---|---|---|---|---|
| Polyol A | 100 | 100 | 100 | 100 | 100 | - | - | - | - | - |
| Polyol B | - | - | - | - | - | 100 | 100 | 100 | 100 | 100 |
| Polyol C | - | - | - | - | - | - | - | - | - | - |
| Polyol D | - | - | - | - | - | - | - | - | - | - |
| Wasser (gesamt) | 3,5 | 4,0 | 3,5 | 3,0 | 3,5 | 3,0 | 3,5 | 3,0 | 4,0 | 3,0 |
| DEOA | 0,5 | 0,5 | 0,5 | 0,5 | 0,5 | 1,0 | 1,0 | 1,0 | 1,0 | 0,5 |
| Ortegol® 204 | 3,0 | 3,0 | 3,0 | 3,0 | 3,0 | - | - | - | - | 3,0 |
| Kosmos® 29 | 0,15 | 0,15 | 0,15 | 0,15 | 0,15 | 0,15 | 0,15 | 0,15 | 0,15 | 0,15 |
| Kosmos® 19 | - | - | - | - | - | - | - | - | - | - |
| TEGOAMIN® BDE | 0,08 | 0,06 | 0,05 | 0,1 | 0,1 | 0,05 | 0,05 | 0,05 | 0,03 | 0,05 |
| TEGOAMIN® 33 | 0,4 | 0,4 | 0,3 | 0,3 | 0,3 | 0,3 | 0,3 | 0,3 | 0,3 | 0,3 |
| Tegostab® B 8681 | 1,0 | 1,0 | 0,8 | 0,8 | 0,8 | 0,8 | 0,8 | 0,8 | 0,8 | 0,8 |
| F 11 | - | - | - | 5 | - | - | 5 | - | - | - |
| Melamin | 25 | 25 | - | - | - | 25 | 25 | 25 | 25 | 25 |
| Desmodur® T 80 | 44,7 | 49,6 | 44,7 | 39,9 | 44,7 | 36,4 | 41,1 | 36,4 | 46,1 | 36,4 |
| erfindungsgemäße Verbindung (Y) | 1,0 | 1,0 | - | - | 1,0 | - | - | 1,5 | 1,5 | 1,5 |

Tabelle 1 - Formulierungen (Fortsetzung)

(Angaben in Gew.-%)

| | Formulierung 21 | 22 | 23 | 24 | 25 | 26 | 27 | 28 | 29 | 30 |
|---|---|---|---|---|---|---|---|---|---|---|
| Polyol A | - | - | - | - | - | - | 100 | 100 | 100 | 100 |
| Polyol B | - | - | - | - | - | - | - | - | - | - |
| Polyol C | 100 | 100 | 100 | 100 | - | - | - | - | - | - |
| Polyol D | - | - | - | - | 100 | 100 | - | - | - | - |
| Wasser (gesamt) | 3,0 | 3,5 | 3,0 | 4,0 | 3,0 | 3,0 | 3,5 | 3,5 | 3,5 | 3,5 |
| DEOA | 1,0 | 1,0 | 1,0 | 1,0 | 0,13 | 0,13 | 0,5 | 0,5 | 0,5 | 0,5 |
| Ortegol® 204 | - | - | - | - | - | - | 3,0 | 3,0 | 3,0 | 3,0 |
| Kosmos® 29 | - | - | - | - | - | - | 0,15 | 0,15 | 0,15 | 0,15 |
| Kosmos® 19 | 0,1 | 0,1 | 0,1 | 0,1 | 0,05 | 0,05 | - | - | - | - |
| TEGOAMIN® BDE | 0,05 | 0,05 | 0,05 | 0,03 | 0,12 | 0,12 | 0,08 | 0,08 | 0,08 | 0,08 |
| TEGOAMIN® 33 | 0,15 | 0,15 | 0,15 | 0,15 | - | - | 0,4 | 0,4 | 0,4 | 0,4 |
| Tegostab® B 8681 | 1,0 | 1,0 | 1,0 | 1,0 | 0,4 | 0,4 | 1,0 | 1,0 | 1,0 | 1,0 |
| F 11 | - | 5 | - | - | - | - | - | - | - | - |
| Melamin | 25 | 25 | 25 | 25 | 25 | 25 | 25 | 25 | 25 | 25 |
| Desmodur® T 80 | 35,7 | 41,0 | 35,7 | 46,4 | 39,4 | 39,4 | 44,7 | 44,7 | 44,7 | 44,7 |
| erfindungsgemäße Verbindung (Y) | - | - | 1,5 | 1,5 | - | 1,5 | 1,0 | 3,0 | 5,0 | * |

* nicht erfindungsgemäße Verbindung:

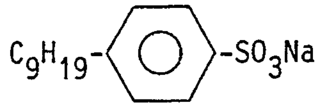

Tabelle 2 - Verschäumungen

| Bsp. Nr. | Formulierung lt. Tabelle 1 Nr. | Verbindung Y (siehe obige Beschreibung) | Dichte [kg . $m^{-3}$] | Stauchhärte [kPa] |
|---|---|---|---|---|
| 1 | 1 | - | 43,6 | 3,1 |
| 2 | 2 | - | 37,0 | 2,9 |
| 3 | 3 | - | 32,1 | 2,7 |
| 4 | 4 | - | 29,2 | 2,7 |
| 5 | 5 | - | 37,1 | 2,4 |
| 6 | 6 | - | 31,8 | 1,8 |
| 7 | 7 | - | 31,6 | 2,3 |
| 8 | 8 | - | 28,9 | 1,8 |
| 9 | 9 | Y1 | 44,8 | 2,7 |
| 10 | 9 | Y2 | 44,6 | 2,3 |
| 11 | 9 | Y3 | 44,0 | 2,5 |
| 12 | 9 | Y4 | 44,3 | 2,2 |
| 13 | 9 | Y5 | 44,5 | 2,6 |
| 14 | 9 | Y6 | 43,7 | 2,3 |
| 15 | 10 | Y7 | 37,0 | 2,1 |
| 16 | 10 | Y8 | 37,3 | 2,2 |
| 17 | 10 | Y9 | 37,6 | 2,6 |
| 18 | 10 | Y10 | 37,1 | 2,0 |
| 19 | 10 | Y11 | 37,1 | 2,3 |
| 20 | 10 | Y12 | 37,4 | 2,2 |
| 21 | 10 | Y13 | 36,9 | 2,5 |
| 22 | 10 | Y14 | 37,3 | 2,6 |
| 23 | 10 | Y15 | 37,6 | 2,2 |
| 24 | 11 | Y16 | 33,2 | 1,9 |
| 25 | 11 | Y17 | 32,8 | 1,8 |
| 26 | 11 | Y18 | 32,5 | 2,2 |

Tabelle 2 - Verschäumungen (Fortsetzung)

| Bsp. Nr. | Formulierung lt. Tabelle 1 Nr. | Verbindung Y (siehe obige Beschreibung) | Dichte [kg . $m^{-3}$] | Stauchhärte [kPa] |
|---|---|---|---|---|
| 27 | 11 | Y19 | 32,7 | 1,8 |
| 28 | 11 | Y20 | 32,4 | 2,1 |
| 29 | 11 | Y21 | 32,6 | 2,3 |
| 30 | 12 | Y22 | 29,4 | 2,5 |
| 31 | 12 | Y23 | 29,2 | 2,3 |
| 32 | 12 | Y24 | 29,0 | 1,7 |
| 33 | 12 | Y25 | 29,6 | 2,3 |
| 34 | 13 | - | 25,6 | 1,6 |
| 35 | 14 | - | 26,0 | 1,1 |
| 36 | 15 | Y4 | 25,7 | 1,1 |
| 37 | 16 | - | 35,8 | 2,6 |
| 38 | 17 | - | 27,8 | 2,1 |
| 39 | 18 | Y4 | 36,4 | 2,0 |
| 40 | 19 | Y4 | 27,2 | 2,0 |
| 41 | 20 | Y4 | 36,2 | 2,0 |
| 42 | 21 | - | 35,8 | 3,1 |
| 43 | 22 | - | 27,5 | 2,5 |
| 44 | 23 | Y10 | 36,0 | 1,9 |
| 45 | 24 | Y10 | 27,8 | 2,0 |
| 46 | 25 | - | 34,8 | 4,4 |
| 47 | 26 | Y19 | 35,0 | 3,5 |
| 48 | 27 | Y20 | 33,2 | 2,0 |
| 49 | 28 | Y20 | 33,4 | 1,7 |
| 50 | 29 | Y20 | 33,1 | 1,5 |
| 51 | 30 | * | 32,1 | 2,7 |

* nicht erfindungsgemäße Verbindung 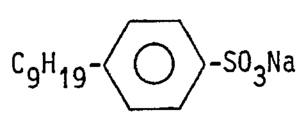

Der Vergleich der Beispiele 9 bis 33 (Formulierungen 9 bis 12) mit den Beispielen 1 bis 4 (Formulierungen 1 bis 4) zeigt, daß bei Verwendung der erfindungsgemäßen Verbindung Y eine signifikante Verminderung der Stauchhärte über einen weiten Raumgewichtsbereich gleichbedeutend mit dem Ersatz physikalischer Treibmittel wie Frigen 11 (Beispiele 5 bis 8, Formulierungen 5 bis 8) möglich ist. Die Beispiele 34 bis 36 (Formulierungen 13 bis 15) belegen, daß auch bei Schäumen, die keine inerten

Füllstoffe, wie z.B. Melamin, enthalten, durch Hinzufügen der erfindungsgemäßen Verbindung Y eine Verringerung der Stauchhärte erfolgt.

Die Beispiele 37 bis 47 (Formulierungen 16 bis 26) zeigen, daß das erfindungsgemäße Verfahren nicht nur auf gefüllte Polyole des Typs A beschränkt ist, sondern auch in Kombination mit den im Handel erhältlichen PHD-, Polymer- und PIPA-Polyolen angewendet werden kann.

Die Konzentration von Y kann, bezogen auf 100 Gew.-% Polyol, über einen weiten Bereich variiert werden, um zu Schäumen mit unterschiedlicher Stauchhärte zu gelangen (Beispiele 48 bis 50, Formulierungen 27 bis 29).

Beispiel 51 (Formulierung 30) zeigt, daß Verbindungen, die keinen Polyoxyalkylenrest enthalten, trotz der anionischen Gruppe im Molekül keine Stauchhärteverminderung bewirken, wohingegen bei Vorhandensein des Polyalkylenrestes (Verbindung Y2) das gewünschte Ergebnis erhalten wird (Beispiel 10, Formulierung 9).

## Patentansprüche

1. Verfahren zur Herstellung von hochelastischen, Urethangruppen aufweisenden Schaumstoffen mit verminderter Stauchhärte durch Umsetzung von mindestens zwei Hydroxylgruppen aufweisenden Polyethern eines Molekulargewichtes von 400 bis 10 000 mit Polyisocyanaten in Gegenwart von Vernetzungsmitteln, Katalysatoren und Wasser und gegebenenfalls in Gegenwart von Emulgatoren, Stabilisatoren, organischen Treibmitteln und weiteren Hilfs- und Zusatzmitteln, dadurch gekennzeichnet, daß man die Umsetzung der Polyurethanbildner in Gegenwart einer Verbindung Y, welche mindestens einen Polyoxyalkylenrest und mindestens einen anionischen Rest im Molekül aufweist, in Mengen von 0,01 bis 5 Gew.-%, bezogen auf Polyol, durchführt.

2. Verfahren nach Anspruch 1, dadurch gekennzeichnet, daß man als Verbindung Y eine solche der allgemeinen Formel

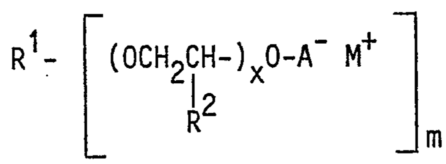

wobei

- $R^1$ ein Wasserstoff-, ein m-wertiger Alkyl-, Aryl- oder Alkylarylrest ist und der Alkylrest jeweils 1 bis 22 Kohlenstoffatome aufweist,
- $R^2$ im polymeren Molekül gleich oder verschieden und ein Wasserstoff-, Methyl- oder Ethylrest ist,
- A ein anorganischer oder organischer anionischer Rest,
- M ein Kation ist, welches eine positive Ladung aufweist, die der negativen Ladung des Anions entspricht,
- m einen Wert von 1 bis 8 hat, jedoch gleich 1 ist, wenn $R^1$ ein Wasserstoffrest ist,
- x einen durchschnittlichen Wert von 1 bis 100 hat,

verwendet.

3. Verfahren nach Anspruch 1, dadurch gekennzeichnet, daß man als Verbindung Y eine solche der allgemeinen Formel

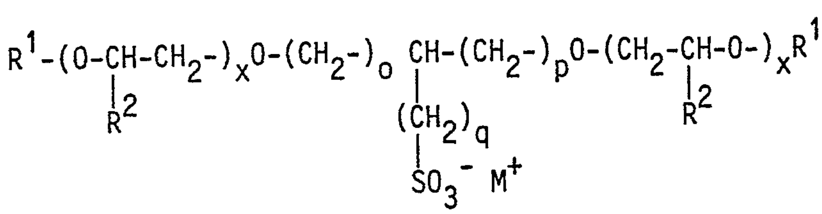

wobei
$R^1$, $R^2$, M und x die bereits angegebene Bedeutung haben, o, p und q gleich oder verschieden sind und jeweils Werte von 0 bis 7 haben, jedoch die Summe o+p+q mindestens gleich 3 ist,

verwendet.

4. Verfahren nach Anspruch 1, dadurch gekennzeichnet, daß man als Verbindung Y eine solche der allgemeinen Formel

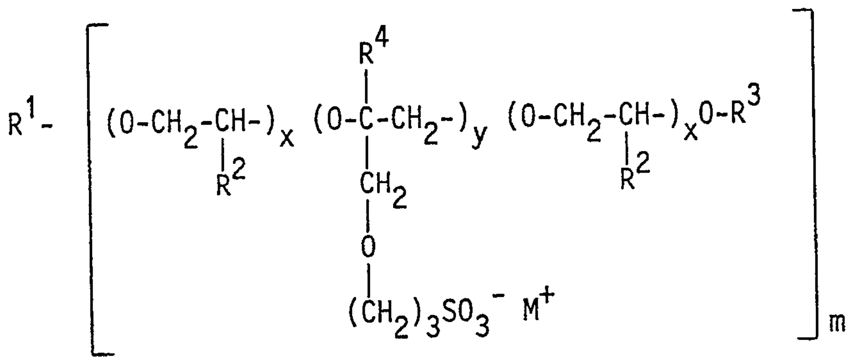

wobei

| | |
|---|---|
| $R^1$, $R^2$, M, m und x | die bereits angegebene Bedeutung haben, |
| $R^3$ | ein Wasserstoff-, Alkyl-, Aryl- oder Alkylarylrest ist und der Alkylrest 1 bis 22 Kohlenstoffatome aufweist, |
| $R^4$ | ein Wasserstoff- oder Methylrest ist, |
| y | gleich m oder ein Vielfaches von m ist, |

verwendet.

5. Verfahren nach Anspruch 1, dadurch gekennzeichnet, daß man als Verbindung Y eine solche der allgemeinen Formel

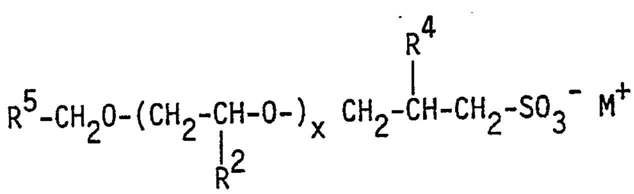

wobei

| | |
|---|---|
| $R^2$, $R^4$, x und M | die bereits angegebene Bedeutung haben, |
| $R^5$ | den Rest |

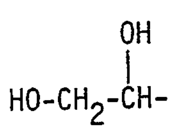

oder

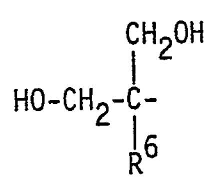

bedeutet, in dem $R^6$ ein Methyl-, Ethyl- oder Propylrest ist,

verwendet.

6. Verfahren nach Anspruch 1, dadurch gekennzeichnet, daß man als Verbindung Y eine solche der allgemeinen Formel

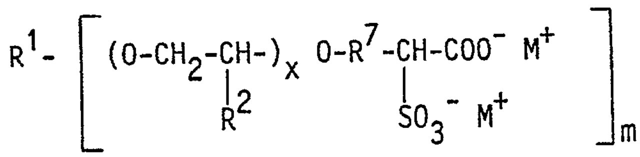

wobei

| | |
|---|---|
| $R^1$, $R^2$ M, x und m | die bereits angegebene Bedeutung haben, |
| $R^7$ | ein zweiwertiger Alkylrest mit 1 bis 22 Kohlenstoffatomen, ein zweiwertiger Aryl- oder Alkylarylrest oder ein Rest der Formel 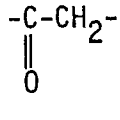 ist, |

verwendet.

7. Verfahren nach Anspruch 1, dadurch gekennzeichnet, daß man als Verbindung Y eine solche der allgemeinen Formel

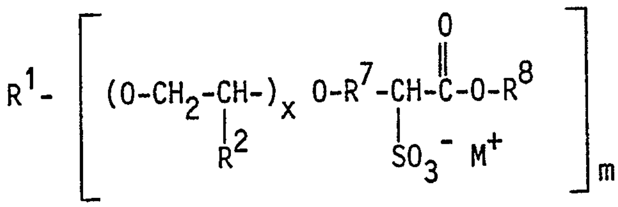

wobei

| | |
|---|---|
| $R^1$, $R^2$ $R^7$, M, x und m | die bereits angegebene Bedeutung haben, |
| $R^8$ | die Bedeutung von R hat oder der Rest 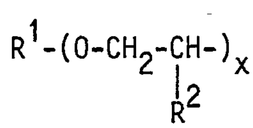 |

ist, verwendet.

8. Verfahren nach einem oder mehreren der vorhergehenden Ansprüche, dadurch gekennzeichnet, daß man als Verbindung Y eine solche verwendet, bei der M ein Alkali-, Erdalkali-, Mn- Fe-, Co-, Ni-, Cu-, Zn-, Al-, $NH_4$-, Alkylammonium- (Alkylrest mit 1 bis 4 Kohlenstoffatomen) oder Hydroxyalkylammonium-Ion (Alkylrest mit 2 bis 4 Kohlenstoffatomen) ist.